# EUROPEAN PATENT APPLICATION

(11) **EP 1 559 345 A1**
(43) Date of publication of application: **03.08.2005**
(21) Application number: 04001833.5
(22) Date of filing: 28.01.2004
(51) Int. Cl.: A47B 96/02, A47B 47/02, F16B 9/02, B65G 1/02

(54) **Storage system and components used therefor**

(71) Applicant: STOW INTERNATIONAL N.V., 7711 Dottignies (BE)
(72) Inventor: Vandemergel, Luc, c/o Stow International NV, 7711 Dottignies (BE)
(74) Representative: Winter, Brandl,&Fürniss, Hübner Röss, Kaiser, Polte Partnerschaft Patent- und Rechtsanwaltskanzlei

(57) **Abstract**

It is described a storage system made of vertically extending frames (10), at least a pair of beams (12) which horizontally interconnect a pair of sidewardly adjacent frames each and at least one depth profile (18) which is mountable to said pair of beams (12) so as to horizontally bridge the space between these beams (12) for providing a support for the goods to be stored. The depth profile (18) has a support surface (24) and at least one downwardly angled flange (26). For providing a maximum of strength while ensuring a simpliest possible mounting expenditure the depth profile (18) with its one end portion (28) of its flange (26) is engageable in a hook-like manner with a slit-like recess (30) in one of the beams (12). The slit (30) and the hook (38) are adapted to each other such that upon insertion of said hook-like designed end portion (28) into said slit-like recess (30) the depth profile (18) is shiftable towards said other beam (30) thereby reaching its final mounting position. In this position the hook-like end portion (28) is caught within said slit-like recess (30) and it is lockable there by bending a locking portion (78) thereof into a corresponding recess (80) of said second beam (12).

## Description

The invention relates to a storage system according to the preamble of claims 1 and 8, respectively, as well as to beams and depth profiles used therefor.

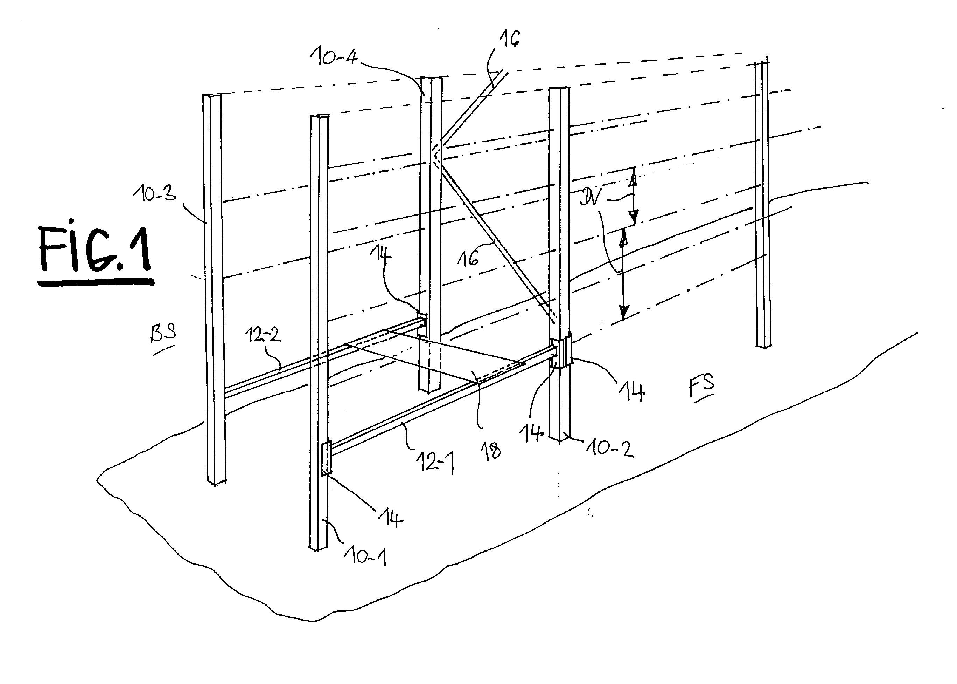

Such storage systems are well known in the art and in particular used in combination with automated storage and retrieval systems (AS/RS). An example of such system is schematically shown in figure 1 which is referred to in the following:

Such systems are in most cases assembled as as so-called multi-store systems consisting of a plurality of vertically extending frames 10 (standard wide-span or pallet-racking frames), wherein in a unit of four frames 10-1 to 10-4 arranged in a rectangle a plurality of pair of beams 12-1, 12-2 is provided which are staggered by predetermined distances DV in vertical direction and which interconnect each a pair of sidewardly adjacent frames 10-1, 10-2 and 10-3, 10-4. For connecting the beams and the frames angled flange profiles are fixed to the end faces of said beams. These flange profiles can be removably but firmly joined to corresponding projections of said frames. These projections - which are not shown in the figures - are provided in a specific pattern which is common to all frames so that the pair of beams 12-1, 12-2 can be hung into the corresponding frames 10-1, 10-2 and 10-3, 10-4, respectively, in horizontal allignment. The pattern for the projections at the frames defines the possible variation of segmentation of the storage face. This kind of mounting equipment is well-know in the art and will therefore not be described in more detail.

The storage system may have one entry side, e.g. the front side FS of figure 1, but can also be designed as a double-entry storage system in which the goods can be stored in and retrieved from the back side BS . In order to stiffen the structure, additional reinforcing bars 16 connect at least some of the front frames 10-2 with the corresponding back frames 10-4.

Corrresponding horizontally aligned beams 12-1, 12-2 carry at least one, as a rule a plurality of depth profiles 18 which horizontally bridge the space between these beams and provide a support for goods to be stored. In Fig. 1 the depth profile is illustrated rather schemetically as a flat component. However, in order to raise the bending strength with a minimum of material, those depth profiles as known in the art have a support surface and downwardly angled flanges, e.g. as shown in the prior art document DE 29614743 U1.

The design of the depth profiles depends on the field of use of the storage system, in particular on the dimensions of the totes or cartons to be stored in this storage system, on the type of crane handling system for automatically storing and retreaving the goods as well as on whether the totes or cartons are to be stored single or double deep.

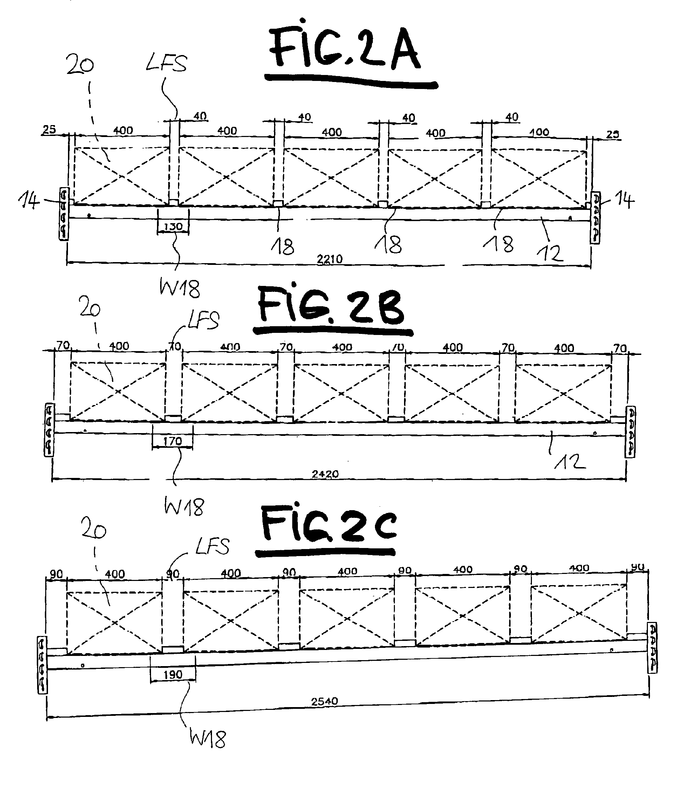

In Fig. 2A to 2C examples of commonly used configurations of tote distributions on depth profiles are illustrated when assuming a storage of totes or cartons with loads varying from 10 to 50 kg/unit. It follows from those figures that not only the width W18 but also the lateral free space LFS between two adjecent cartons or totes - schemetically illustrated with dotted lines and having reference numeral 20 - may vary within wide ranges. Therefore, the problem when designing a multi-store system of the above outlined type resides in that the system must be flexible for fulfilling the requirements given by the crane and tote handling device in all three coordinates and at the same time be structured such that the mounting thereof follows a single concept which provides a predetermined stability with the smallest possible space and material consumption. In this context, the system tolerances are very important and the mounting technique. To this end, it turned out that modern storage systems can only be competitive when the components can be precisely mounted with given narrow tolerances by requiring a minimum of mounting time.

In order to comply with such requirement in EP 0882660 B1 a storage system according to the preamble of claim 1 has become known. The components of this system can be mounted with short installation periods since there is no need for any bolts or rivets for connecting the beams to the frames or the depth profiles to the beams, respectively. However, it turned out that in this known construction the depth profiles can only contribute to the strenghening of the stability of the storage system when the depth profiles are designed to project from the front of the storage system so that downwardly bent flanges can grip the beam. This affects the space which can be used in front of the storage system and which is needed for the automated storage and retrieval system. Moreover, a higher stiffness of the depth profiles or shelves, respectively, can only be reached by raising the height of the U-form center portion of the profile, thus consuming additional space which is needed for the crane and tote handling system.

Therefore, it is the object underlying the present invention to provide a multi-store system, in particular for use with an automated storage and retrieval system handling unit loads of 10 bis 25 kg, which provides increased flexibility to handle different types of crane handling systems and different types of totes or cartons with an optimized storage capacity, with the additional advantage of improved stability to be reached with less installation time.

This object is achieved by a storage system with the featues of claims 1 and 8, respectively. Specific compounds of this storage system, such as beams and depth profiles are the subject matter of independent claims 23 and 27, respectively.

According to the invention as defined by the system of claim 1 the depth profiles are still detachably mountable to said pair of beams by using exclusively the material of said depth profile and/or of said beams and the depth profile can be locked with said pair of beams by form fit engagement allowing a horizontal force coupling between said pair of beams. Since the depth profile engages with its one end portion of its flange a slit-like recess in one of the beams in a hook-like manner it is possible to shorten the depth profile and at the same time provide a coupling which allows the transmission of horizontal forces between the pair of beams through the depth profile. The specific adaption of the slit in the one beam and a hook-like designed first end portion of the downwardly angled flange of the depth profile combined with the locking principle for the other end portion, where a locking portion formed integrally with the depth profile can be bent into a corresponding recess of the other beam, allows an extremely easy and quick mounting of the depth profiles in the correct location by keeping precise and narrow tolerances, as the slits define the exact lateral position of the depth profiles. In addition, the depth profiles can be mounted from one side FS only without the need of having access from the other side just by hanging the hook-like designed end portions of flange(s) into the corresponding slit of the appertaining beam, by moving the depth profile into its final mounting position and by firmly locking the other end portion of the depth profile to the other beam just by applying a realitively small pressure force onto the locking portion thus securing the depth profile against any horizontal movement in the direction of its longitudinal extension. As there is a corresponding recess for the locking portion and the position of the locking portion is exactly defined with respect to the geometry of the depth profile and thus - by the interference with the slits - with respect to the pair of beams, the interference between the locking portion and the recess in the beam can be used for fine positioning of the depth profile. By this, narrower tolerances can be kept. The installation still does not require any separate fastening means like bolts or rivets.

Claims 2 and 3 are directed to alternatives for the location of the slit like recess in one of the beams. A specifically advantageous embodiment is provided with the design of claim 3 since such corner portion can be seen when mounting the depth profile so that the installation process is simplified. Moreover, using the corner portion for such engagement automatically provides an opening with a width that is different when seen from different angles. This allows a smooth insertion of an end portion of a flange of the depth profile in a first direction. Upon tilting the depth profile in a different plane this end portion is securely caught in said slit.

Preferably - as outlined in claim 4 - the depth profile is engageable with said other beam of said pair of beams through the other end portion () of said flange again by interacting with a vertical slit which is formed into the beam at its corner portion which faces the other beam. This design is advantageous as it further improves the mounting accuracy. Moreover, it allows a further shortening of the depth profiles.

With the specific features of claim 5 the depth profile can be easily secured against vertical movements without complicating the mounting or installation process. Thus, upon completing the mounting of the depth profile not only their lateral but also their vertical position is fixed within narrow tolerances.

With the embodiment of claim 6 the installation process can be further simplified by using a face of a cut out portion in the flange of the depth profile for its positioning in the final mounting position.

The above object is also achieved by the features of claim 8 which define an independent invention. However, these features can also be used in combination with the subect matter of any of the claims 1 to 7. The concept of the subject matter of claim 8 is in particular advantageous since it allows to maximise the available storage space between two vertically adjacent beams. In detail, by this design the slit in the depth profile can be used for its exact positioning with respect to the beams with respect to three axes. At the same time, however, it allows that the depth profile is formed such that in the final mounting position it does not project above the upper edge of the beam at the entry side of the storage system. This is not only important for smoothening the automated storage and retrieval work to be done by conventional systems but also with respect to the maximization of the storage capacity.

When the storage system is applied for use with a single entry, it is advantageous to design the beams in line with claim 9. This provides an automatic stop for the totes or goods or cartons to be stored in the storage system.

When used in combination with a double entry the embodiment of claim 10 has specific advantages in terms of a simplified manufacturing process for the beams.

A particular advantage of the present invention is to be seen that the design of the lateral downward angled flanges can be used not only for vertical and lateral precise positioning of the depth profile but also for enhancing the overall strength of the storage system. This is achieved by fixing the depth profile at least within the slits of one of the beams such that the depth profile can transmit a force from one beam to the other. Therefore, when handling the goods on the depth profile by shifting the friction forces can be transmitted to the pair of beams whereby excessive deflections of the storage system can be reduced. This, in turn, allows the use of highly sophisticated automated storage and retrieval systems which require most exact positionings.

A rather simple design of the depth profile allowing the above multiple function is the subject matter of claims 11 to 13.

When the depth profile is symmetrical with respect to a center plane which in the mounted position is orthogonal to said pair of beams there is the advantageous effect that depth profiles to be mounted on both ends of the beams adjacent to the frames can be easily manufactured just by cutting the depth profiles into two pieces.

When the depth profile has a cross section in line with claim 15 it provides excellent stability whilst having the advantage of being integrated within the storage system in a space saving manner. Namely, the depth profile with its lateral portions projects only by a small measure - which is given by the position of the horizontal slit and which essentially corresponds to the depth of its depression in the center - from the upper side of the support surface of the respective beam. It turned out that a depth of the depression in a range of only 4 to 6 mm is enough to provide sufficient stiffness for the totes to be stored.

The strength of the depth profile can be easily controlled by the measures of claim 16 without affecting the functionalityas described above.

It also turned out that the above functions of the beams can be easily met even when designing the cross section in line with claim 17, which allows to keep the prescribed from tolerances even when the depth profiles are asymmetrically loaded. In detail, as the cross sections of the beams have their shear center close to a plane of the resulting support force acting on said depth profile, they do not undergo any substantial torsion movement. This is also advantageous with respect to the interaction between depth profiles and beams since excessive forces acting on any functional parts can be controlled. This, in turn, allows the components to be re-used again and again when assembling different storage systems therefrom from time to time.

A very effective way of securing the depth profile to the beam is the subject matter of claim 17.
Moreover, it allows a simple manufacturing process of the depth profile.

When - in line with claim 19 - the material tongue is geometrically adapted to the recess in said beam it can be effectively used for providing a firm connection to the beam. The material tongue can be basically used in two different ways: if it will be bent down by less than 90°, preferably only by 15 to 40°only, it serves as a stop for horizontal movement of the depth profile. If, however, it will be bent down for more than 90° it can additionally serve to counteract vertical movement of the depth profile. This letter way of use is advantageous when the depth profile having only one lateral downward angled flange is used.

The embodiment of claim 20 allows an easy disassembling of the depth profile as the tool can be applied from above which simplifies the handling of the tool.

Advantageous designs of particular componets of the storage system are defined in claims 23 to 26 for the beams and in claims 27 to 32 for the depth profile. It is to be noted that the design of these components should be protected as such independently from the complete storage system as a separate inventive idea.

The specific advantage of the beam of claim 23 or 24 lies in that it can be manufactured with bending machines in which steel sheets are transformed by being continuously processed through a series of bending tools.

Also a depth profile according to one of the claims 27 to 32 can be maunfactured exclusively by punching and bending processes of metal sheets so that the manufacturing process can be done in conventional manufacturing plants of such components.

Advantageous further embodiments are the subect matter of the remaining sub-claims.

In the following - by way of example - some embodiments of the invention are described in more detail. In the drawings:
figure 3 is a perspective view of a pair of horizontally alligned beams of a storage system into which depth profiles are to be mounted;
figure 3A is the detail "IIIA" in figure 3 with removed flange profile;
figure 4 is a schematic side view of the arrangement of figure 3 showing the depth profile in a first mounting phase;
figure 5 is the detailed view "V" in figure 4;
figure 6 is a schematic side view similar to that of figure 4 and showing the depth profile in a final mounting phase;
figures 7 and 8 are the details "VII" and "VIII" of figure 6;
figures 9 and 10 are cross sections of the beams which are used in the embodiment of figure 3;
figure 11 is a perspective view of the front beam as used in the embodiment of figure 3, the flange profiles being omitted;
figures 12 and 13 are detail views of parts "12" and "13" in figure 11;
figure 14 is a perspective view of a depth profile as used in the embodiment of figure 3;
figures 15 to 17 are the details "15", "16" and "17" of figure 14;
figure 18 is a perspective view of the depth profile when fully mounted to the fron beam;
figure 19 is a cross section in a plain "XIX"-"XIX" in figure 18;
figure 20 is a detailed view when looking in the arrow "XX" in figure 16;
figure 21 is an enlarged view along arrow "XXI" in figure 18;
figure 22 is a perspective view - similar to figure 18 - of an end portion of a modified depth profile when fully mounted to the front beam;
figure 23 is a cross section of "XXIII"-"XXIII" in figure 22;
figures 24 and 25 are detailed views with looking directions "XXIV" and "XXV" in figure 14;
figure 26 is a perspective view - similar to that of figure 3 - of a modified portion of the storage system to be used as a double entry system;
figure 27 is a schematic side view of the arrangement of figure 26 showing the depth profile in a first mounting phase;
figure 28 is the detailed view "XXVIII" in figure 27;
figure 29 is an enlarged schematic side view similar to that of figures 7 and 8 and showing the depth profile in a final mounting phase;
figure 30 is a perspective view of detail "XXX" in figure 26 of the depth profile into which a stopper member is to be removeably inserted;
figure 31 is a view of the stopper member of figure 30 when viewed from below;
figure 32 is the view of "XXXII" in figure 31;
figure 33 is the cross section "XXXIII"-"XXXIII" of figure 32;
figure 34 is a perspective view of a further modification of a depth profile designed as a shelve;
figure 35 is the detail "XXXV" of figure 34; and
figure 36 is the detail when seen in the direction of arrow "XXXVI" of figure 34.

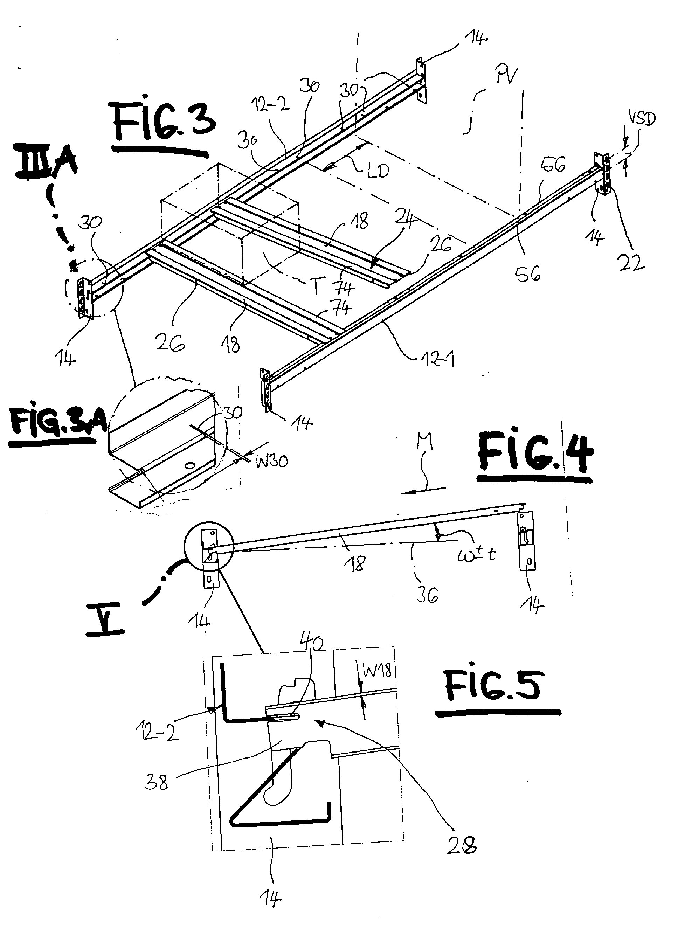

In figure 3 by way of example only one level unit of a storage system is shown. This storage system is designed as a single or double deep, single entry system.

The beams 12-1, 12-2 to be secured to the - not shown - frames (which can be conventional STOW Pal-rack or STOW Midi-Rack frames) carry again angled flange profiles 14 which are preferably welded to the respective faces. The fixing technique for the beams is well known in the art so that a detailed description can be omitted. However, it is important to note that the design of the flange profiles 14 - allows the positioning of the beams 12-1, 12-2 in a plurality of height levels which are predetermined by the location of the counter fixing means at the frames. This provides an adustability in height which is defined by the vertical shift distance VSD of the pattern of perforations 22 in the flange profiles 14.

In principle, it is possible to select the measure VSD from case to case when designing the storage system according to the the individual needs. However, it is advantageous to use a fixed measure VSD, e.g. 50 mm, for a complete storage program and to individually adjust the vertical distances DV (see figure 1) between two layers by varying the position of the flange profile in vertical direction.

Reference numerals 18 denote depth profiles which are mounted to the pair of beams 12-1, 12-2 so as to horizontally bridge the space between these beams in order to provide a support for the goods to be stored, e.g. a tote T or carton which is shown in figure 3 with a dot-dashed line. The depth profile 18 has a support surface 24 and at least one downwardly angled flange 26 and it is designed such that it is detachably mountable to said pair of beams 12-1, 12-2 by using exclusively the material of said depth profile and/or of said beams. This will be described in mor detail with reference to figures 4 to 25.

As can be seen from figures 5 and 7 the depth profile 18 engages with its one end portion 28 of its flange 26 in a hook-like manner a corresponding slit 30 in the beam 12-2 such that here is a lateral form-fit engangement between end portion 28 and slit 30. With other words, the width W30 of the slit 30 is slightly greater than the wall thickness W18 (see figure 5) of the depth profile 18 which is made from metal sheet. For a wall thickness W18 of 1,5 mm the with W30 of the slit 30 can be chosen as 2,5 mm.

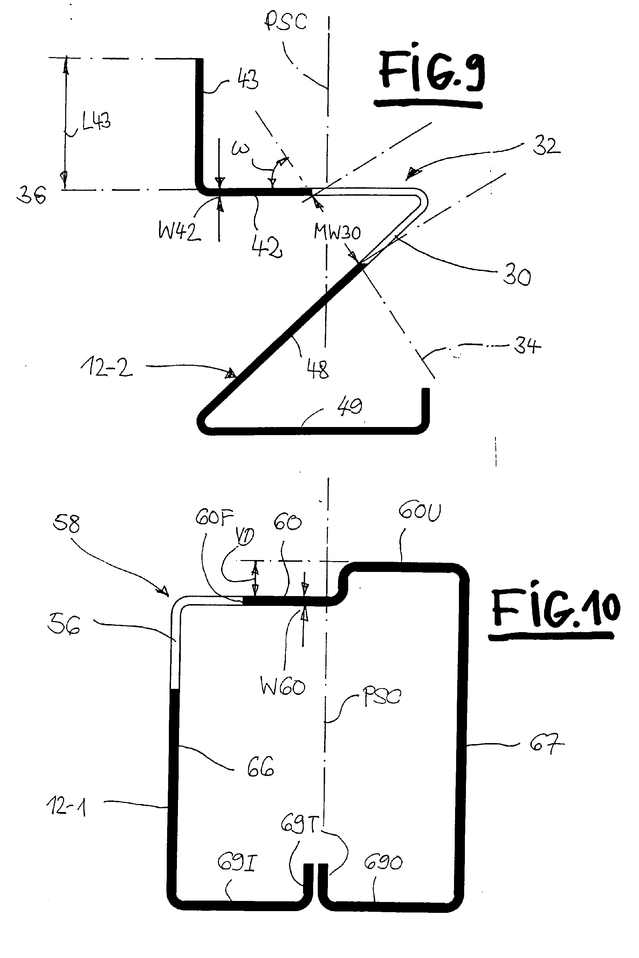

Since the slit 30 is formed in the area of a corner portion 32 of the beam profile 12-2 the maximum width MW30 lies in a plane 34 which is oblique by a specific acute angle OMEGA with respect to a horizontal plane (see figure 9). This geometry is used for the specific mounting process:

In detail, the end portion 28 of the flange 18 has a widened head portion 38 which is adjacend to an essentially horizontal slit 40 (see figures 5, 7, 16 and 20) and which is fittingly insertable into said vertical slit 30 of the beam 12-2 only in an orientation which is tilted by an acute angle of OMEGA +- a tolerance ange t with respect to the horizontal plane 36. This is shown in figures 4 and 5 from which it becomes clear thar in the tilted position the widened head portion 38 may smoothly be inserted into the vertical slit 30 by moving the depth profile 18 in the direction of arrow M. This is the first stage of the mounting procedure.

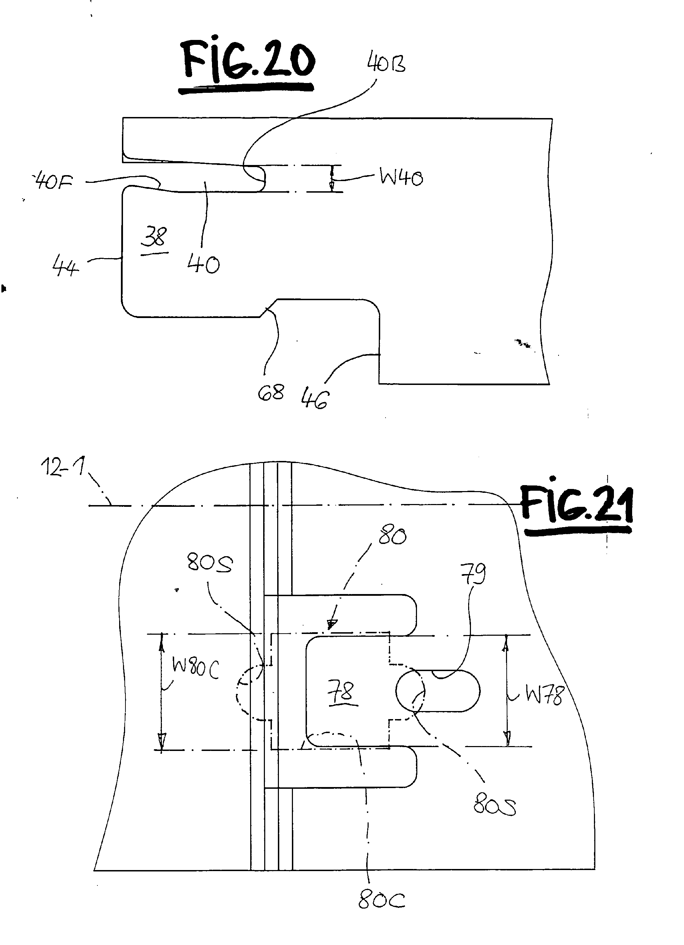

As can be also taken from the drawings, the essentially horizontal slit 40 which is adapted to cooperate with a horizontal leg 42 of the profile of the beam 12-2, has a form which allows the leg 42 to smoothly enter the slit 40 upon insertion of the end portion 28 into the vertical slit 30. To this end the slit 40 - as shown in greater detail figure 20 - has a width W40 which is greater than the thickness W42 of the profile leg 42, i.e. the wall thickness of the beam profile. For example with a thickness of the beam profile of 2 mm the measure W42 is in the range of 2,8 mm. Morover, as shown in figures 16 and 20 - the slit 40 angles somewhat upwards in the direction of its back face 44 so that in the first mounting phase of the depth profile 18 (shown in figure 4) a front portion 40F of the slit 40 runs essentially parallel with the leg 42 of the beam profile 12-2.

When the widened head portion 38 has passed the bottleneck of the vertical slit 30 by moving the depth profile in the direction of arrow M the depth profile 12-2 can be brought down into an almost horizontal orientation and may be shifted further on until a bottom 40B and or a shoulder 46 abuts with the material of the depth profile 12-2, i.e. with a face 42F of the leg 42 or an oblique leg 48, respectively.

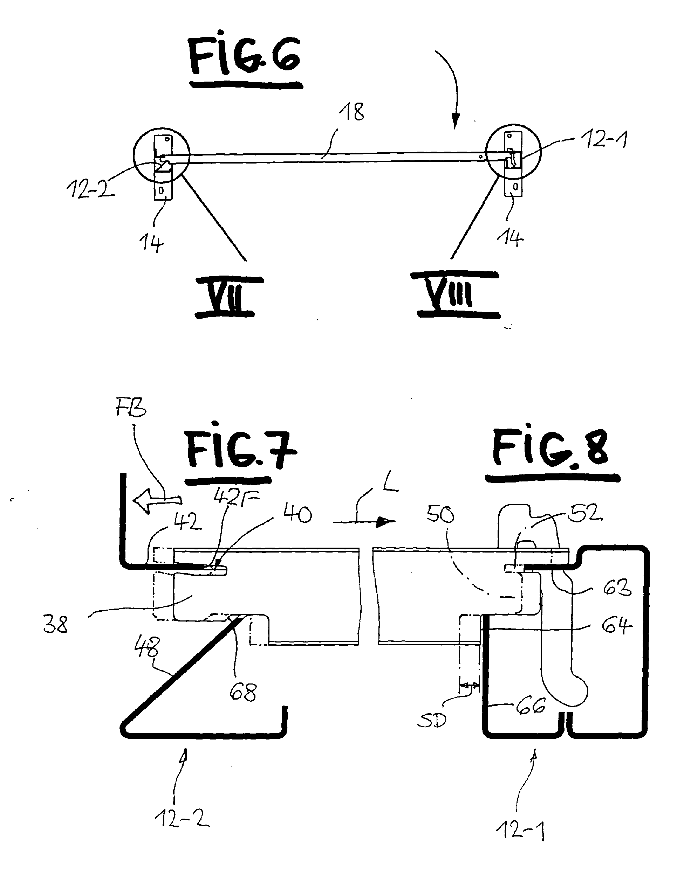

In this situation - which is shown in figures 7 and 8 by dash-dotted lines - the depth profile 12-2 can be brought in a completely horizontal orientation so that a nose 50 underneath a horizontal slit 52 in the other end portion 54 of the angled flange 26 can freely enter a corresponding vertical slit 56 - as can be best seen from figure 12 and which lies in a common vertical plane PV with the corresponding vertical slit 30 in the beam 12-2, as illustrated with das-dotted lines in figure 3 - in a corner portion 58 of the beam 12-1. In this mounting stage the depth profile 18 comes into an abutting contact with the beam 12-1 so that the depth profile 18 is maintained in the horizontally orientated position in which the slit 52 is in alignment with a leg 60 of the beam profile 12-1. Consequently, and inview of the dimension of the slit 52 whose vertical width W52 is again greater than the thickness W60 of the leg 60 of the beam profile, the depth profile 18 can be shifted in the direction of the arrow L for preparing the locking of the depth profile 18 at the beams 12-1, 12-2.

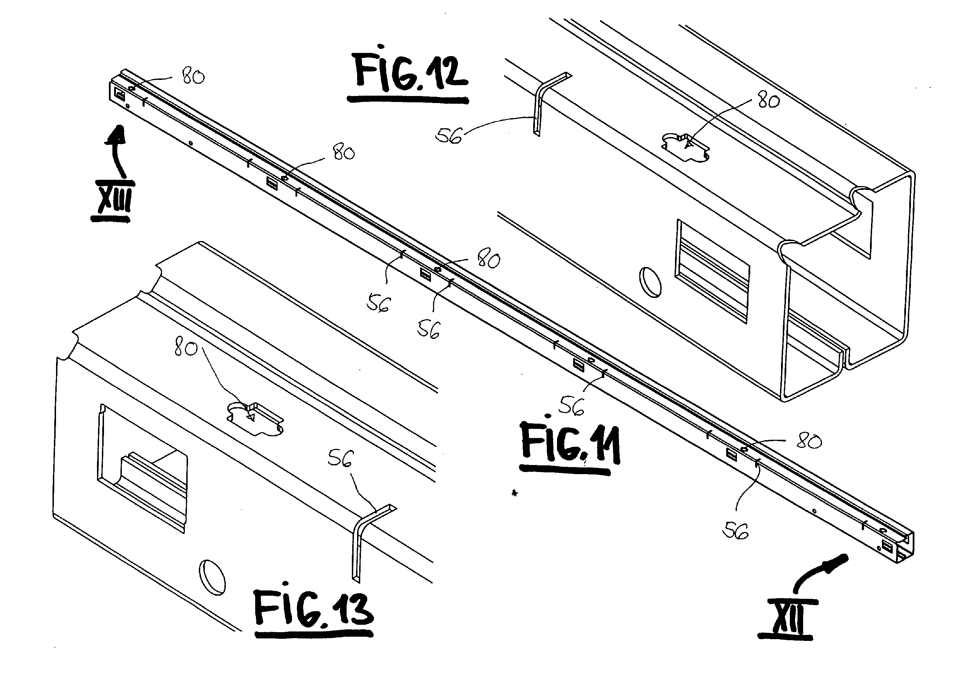

Preferably, the depth profile 18 is shifted by a distance SD (see figure 8) so that a predetermined abutting position can be reached in which the profile of both beams 12-1 and 12-2 are caught with the horizontal slits 40, 52. Preferably, the decisive surface for defining this abutting position is a bottom face 62 of the slit 52 which comes into contact with an inner face 60F (see figure 10) of the slit 56 in the profile leg 60.

As can be taken from figure 7 and 8, in this abutment position a vertically extending face comes close to a vertical leg 66 of the beam profile 12-1. At the same time a shoulder 68 nearly contacts the obliquely running leg 48 of the the beam profile 12-2. This geometric configuration makes sure that the depth profile 18 upon complete locking with the beam 12-1 - as lateron described - is able to transmit tension forces from beam 12-1.

When the depth profile 18 is in the position as illustrated by the throughgoing lines in figures 7 and 8 it can no longer be lifted away from the beams 12-1, 12-2. For completely locking the depth profile 18 the following procedure applies:

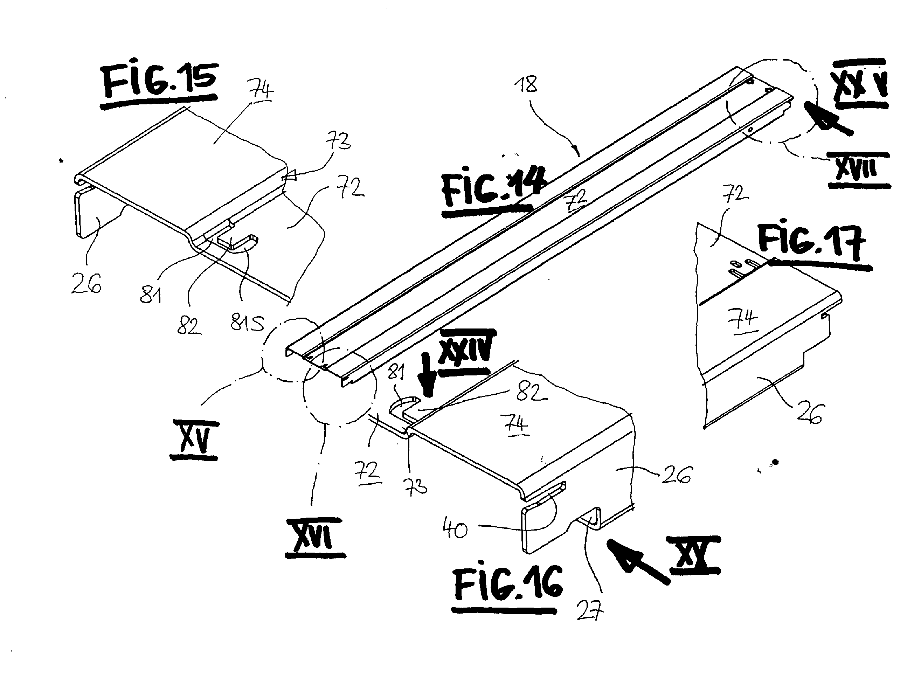

As shown in detail in figures 14 to 19, the depth profile 18 has a cross section essentially in the form of a preferably flat "U" in which the two vertical extending angled flanges 26 are bent down from a main leg 70 which bridges the two flanges 26 and which has a slightly depressed center portion 72 by which the depth profile 18 contacts via an enlarged area the upper side of the respective beam 12-1, 12-2. With other words, the center portion 72 forms the force transmitting surface of the depth profile 18 and it continues via an upward orientated step 73 into again horizontal support portions 74 which support the goods T to be stored.

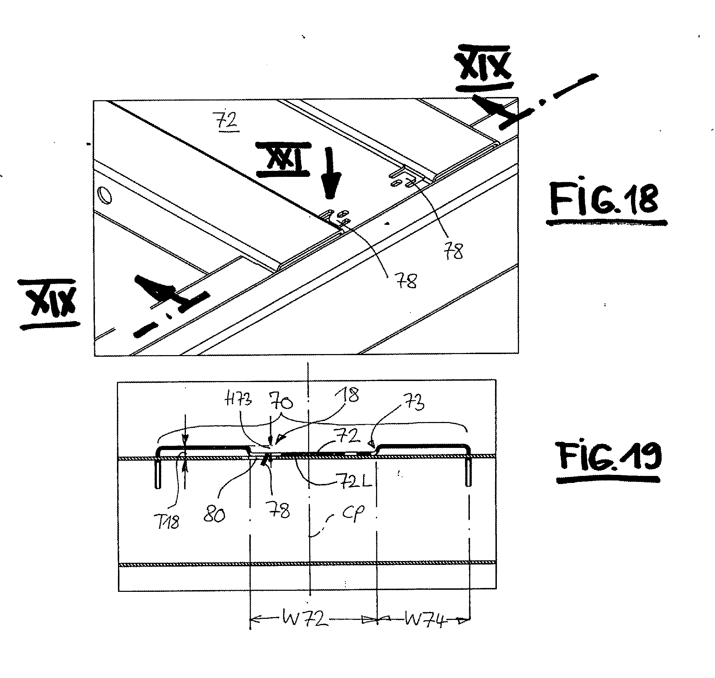

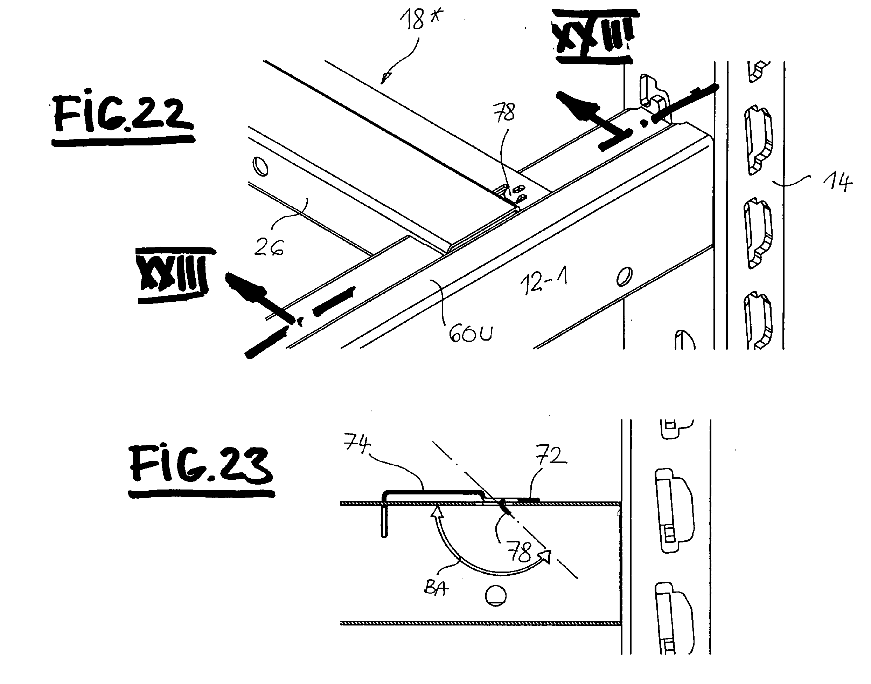

As can be best seen in figures 18 and 21 the depth profile 18 at its one end portion has at least one cut out or punched out part thus forming a locking tongue 78 which - in the final mounting position of the depth profile 18 as illustrated in figures 7 and 8 lies above a specifically designed recess 80 which is formed in the leg 60 of the beam profile. This is schematically illustrated by dash-dotted lines in figure 21.

The locking recess 80 has two axes of symmetry and it has a center part 80C in the form of a square and two lateral semi-circular recesses 80S. A lateral width W80C of the recess 80 is slightly larger than the lateral width W78 of the locking tongue 78 so that the latter can be bent down by a tool, such as a srew driver so as to reach a position as shown in figure 19. In this position the depth profile 18 is firmly connected to the beams 12-1, 12-2 so that it cannot move either in longitudinal, or lateral or vertical direction.

By this firm connection which is achieved without any additional fastening components the two beams 12-1, 12-2 are horizontally coupled via the depth profile 18 since for example - as can be explained best with referenct to figures 7 and 8 - a backwards directed force FB acting on the beam profile 12-2 is transmitted through the contact between the leg 48 of the profile and shoulder 68 of the head portion 38 to the depth profile 18 and from there through the lateral faces of the locking tongue 78 to the beam profile 12-1. This allows to enhance the stability of the storage system even when using less material for its components.

Figure 18 shows that there are two locking tongues 78 provided at one end portion of the depth profile 18. This is due to the fact that it has turned out to be advantageous to design the depth profile 18 symmetric with respect to a vertical center plane CP - as can be seen from figure 19. The reasons for this are as follows:

As can be seen from figure 3, the totes T are supported by the support portions 74 of two adjacent depth profiles 18. This means that the geometry of cross section of the depth profile 18 is selected such that the width W72 of the center portion 72 is tailored to the space which the automated store and retrieval system requires. The width W74 of the support portions 74 is selected dependent on the goods to be stored. When the primary goods are cartons having less rigididy than totes the width W74 is preferably increased. The lateral distance LD between the vertical slits 30 (and 56) for adjacent depth profiles 18 is selected in compliance with the overall lateral dimension of the good T.

It follows from the above, that the invention allows to individually tailor the storage system to the specific storage requirements by adequately fixing the geometry of the depth profile 18 and by providing a specific pattern of slits 30, 56 in the beams 12-1, 12-2. Since the slits to be provided in the beams for receiving the depth profiles are minimized in size so that they cannot significanty affect the strength of the beams 12-1, 12-2 it it possible to equip the beams 12-1, 12-2 with a standard pattern of slits matching with the profile of the depth profile 18 but allowing an insertion of the depth profiles 18 with flexible lateral distances. Such standard beam is shown in figures 11 to 13 which is designed to carry five rows of totes or cartons T.

With this arrangement it is possible to quickly adust the storage system to the specific store tasks and to work even with varying measures LD in one level of the storage system.

Another consequence form such design is that the outermost depth profiles which are neighboring the frames 10-1, 10-2 and 10-3, 10-4 have to be designed differently, as can be seen from figures 22 and 23. In detail, these depth profiles are manufactured by cutting the above described depth profile - which is shown in figures 14 to 19 - into two pieces. Consequently, there is only one angled flange 26 available for engaging the slits 30 and 56 in the beams 12-2, 12-1. Therefore, in order to additionally stabilize the depth profile 18 in its final mounting position, the locking tongue 78 is bent down by an angle BA (see figure 23) which is greater than 90°.

As also on the side of the backward beam 12-2 one angled flange is missing for interacting with the beam profile, the center portion 72 of the depth profile 18 is equipped also at this end portion with a pair of fixing tongues 82 which are formed by a cut out or stamped out portion 81 of the metal sheet which is used for the depth profile. The location of such fixing tongues is adapted to the design of the beam profile 12-2 such that in the final mounting position of the depth profile the fixing tongue lies above a corresponding recess - not shown - in the appertaining beam 12-2 so that the fixing tongue may be bent down into a form fit engangement with that recess.

When the depth profiles 18 have to be removed form the beams 12-1, 12-2 it is only necessary to bend the locking tongues 78 and - if used - the fixing tongues 82 back essentially into their horizontal orientation. For facilitating this work by use of a simple tool, e.g. a srew driver, the cut out or stamped portion of the profile 18 is adapted such to the corresponding recess 80 underneath therof that there remains enough space for inserting the tool and gripping the locking tongue. As can be seen from figure 21 such space is enlarged by providing the semi-circular recess extensions 80S.

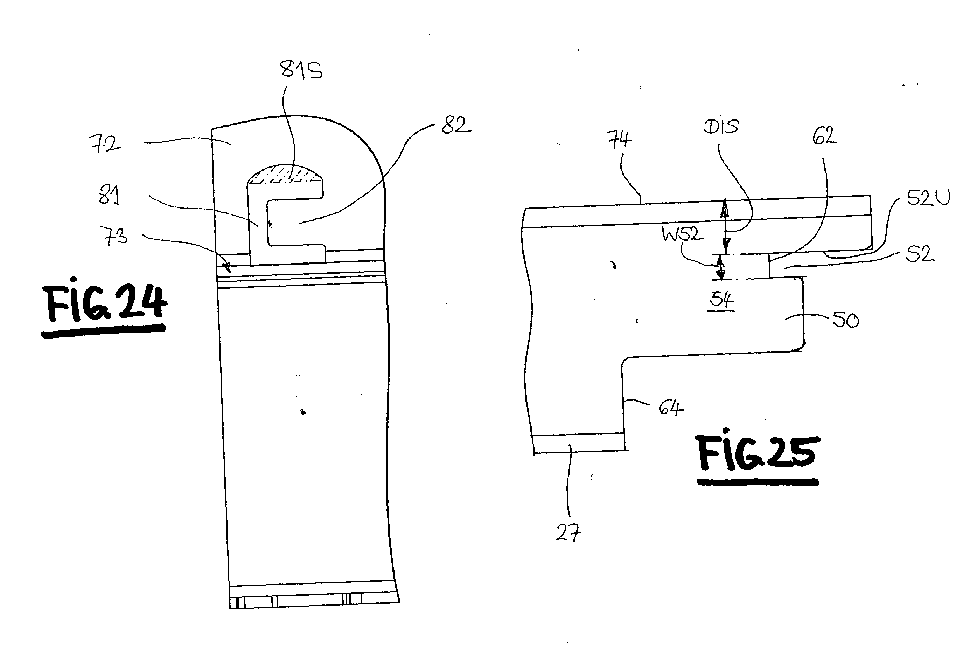

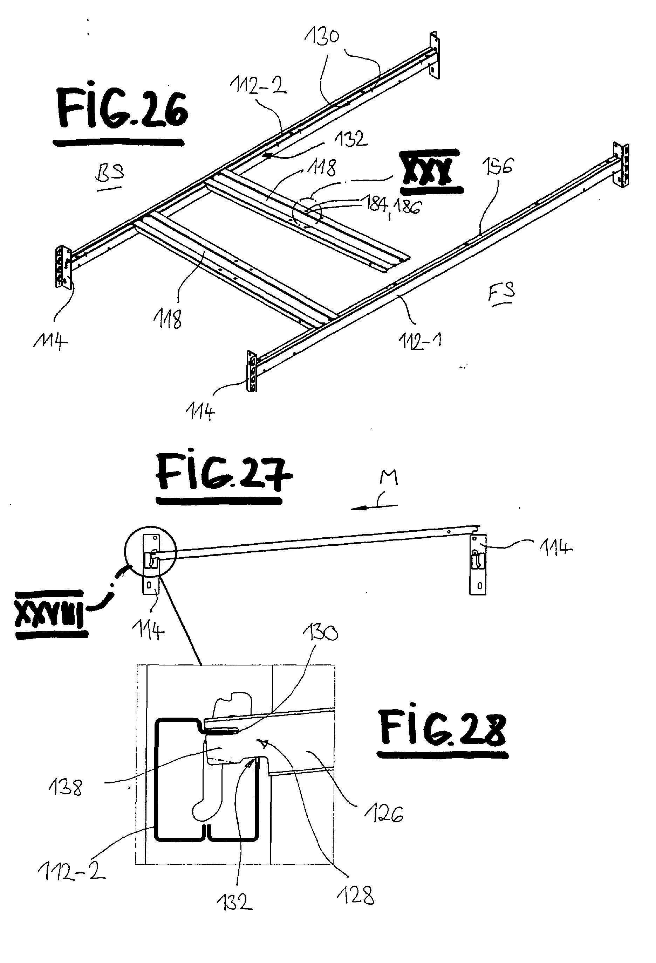

At the side of the fixing tongues 82 such space is available by a circular enlargement 81S - as indicated by a hatched area in figure 24 - still lying above a recess in the beam profile.

For bending back the locking tongue 78 from the position shown in figure 23 an additional hole 79 in the depth profile 18 is used. This hole 79 is positioned such that it overlaps the semicircular extension 80S of the recess 80 so that the tool may be inserted and can contact the material tongue 78.

As can be seen from the drawings, the components of the storage system are optimized also in terms of rigidity. This is performed by making use of multiple bent profiles preferably manufactured out of sheet metal. In order to additionally strengthen the depth profiles it is advantageous when the angled flanges 26 have an end portion 27 - as can be seen in figure 16 - each which is bent inwardly.

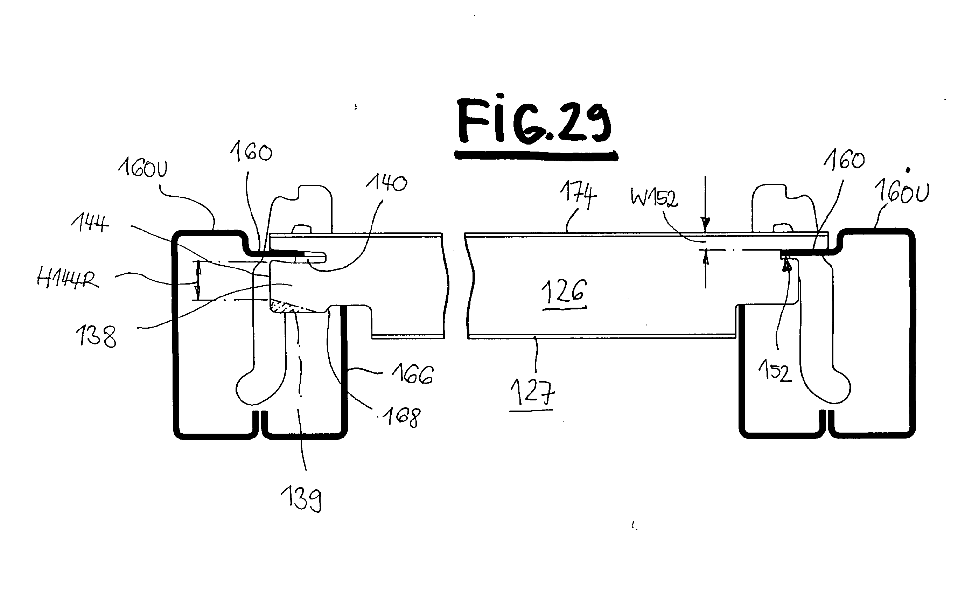

One specific peculiarity of the present invention is to be seen in that the enhanced strength of the components is combined with advantageous effects in terms of the handling friendliness of the storage system. In detail, as can be seen from the above referenced drawings, the front beams 12-1 are adapted such to the design of the depth profiles 18 that said depth profiles 18 are supported at their both ends on horizontal beam surfaces 42 and 63 which lie by a predetermined measure VD ( as can be taken from figure 10 showing the beam profile) below an upper edge 60U of the beam 12-1 forming an entry of the storage system. This predetermined measure VD is preferably at least somewhat greater than a vertical distance DIS of the above described horizontal slit 52 from the uppermost surface 74 of the depth profile (see figure 25). With other words, the measure VD is not smaller that the height H73 of the step 73 in the support surface of the depth profile plus the thickness T18 of the metal sheet for such profile (see figure 19). With such design, the goods to be stored can freely enter the front side without being obstructed by any component of the storage system. Moreover, the vertical minimum distance of the beams can be reduced thereby raising th storage capacity.

When a storage system having a single entry is required - as shown in figures 3 to 25 - the front beams 12-1 are designed differently from the back beams 12-2. Both beams are optimized with respect to stability as follows:

The beam 12-2 at the entry side of the storage system has an essentially closed profile (see figure 10) with a stepped upper surface which is formed by profile legs 60 and 60U, two vertical legs 66 and 67 and two bottom legs 69I and 690 which at their respective end portions are angled somewhat upward and come into close contact with each other. This profile can be manufactured from metal sheet in continuously working bending units. Even though the profile is not closed the design is such that the shear center of the profile lies in a plane PSC (see figure 10) which is close to the plane where the external load is introduced. This ensures a torsion free bending behaviour of the profile.

The back beam 12-2 has a profile (see figure 9) essentially in the form of a "Z" wherein the upper horizontal leg 42 defines the support surface and continues in an upwardly bent rim portion 43 having a length L43 which is grater than the height VD of the step in the upper surface of the front beam at the entry side. This provides a stop for the goods when moved into the storage system.

By the design of the beam profile as shown in figure 9, in particular by bending the open profile in a Z-form having a bottom leg 49 whose end portion is bent upwardly, the shear center of this profile can be brought into a plane PSC which again is near the plane in which the external forces are introduced. This provides additional stability and simplifies the control of deflections within predetermined tolerance ranges.

For a storage system designed for unit loads of up to 25 kg excellent tolerances can be reached with wall thicknesses of the beam profiles of about 2 mm and with profile heights of about 60 mm for the front beam with a step of roughly 6 mm, and of about 54 mm for the back beam having a rim portion 43 with a height of 18 or 28 mm.

When a so-called double-entry storage system is required, the storage system is to be modified as shown in figures 26 to 33. For simplifying the decription those parts which correspond to components with are similar to those as used in the above descriebd embodiment are designated with similar reference numerals which, however, are headed by a "1". The storage system of figures 26 to 33 is a single deep, double entry system. It can also be designed, however, as a double deep system.

As can be best seen in figure 29, this type of storage system uses identical beam profiles for the beams 112-1 and 112-2 so that both beams have an essentially closed profile with a stepped upper surface consisting of profile legs 160U, 160 with a step inbewtween which is higher than the distance W152 of a horizontal slit 152 to the uppermost surface, i.e. the support surface 174 of the depth profile 118. This allows to store and to retrieve the goods (totes and/or cartons) by means of automated systems without interfering with edges or other profile parts of the depth profiles, even when the goods slide on the upper surfaces 160U of the beams 112-1, 112-2.

The depth profiles 118 are identical to those as used for the single entry storage system, except the design of the widened head portion 138. As indicated by the dash-dotted line in figure 29, this head portion 138 behind the chamfered shoulder 168 can be somewhat reduced in height by cutting away the hatched triangle so as to establish a reduced height H144R at its back face 144. This allows an easier and smoother insertion of the head portions 138 into the vertical slits 130 of the back beams 112-2 in the installation phase as shown in figures 27 and 28. By this modification the handling of the depth profiles 118 from one side of the storage system is further simplified, which allows to reduce the mounting costs.

The profile used for the beams 112-1, 112-2 is again selected such that it can be formed by a continuously bend forming process. The profile can be identical to that as shown in figure 10.

Since the double entry storage system allows access from both sides, i.e. front side FS and back side BS it is advantageous to equip the depth profiles 118 with a specific design for avoiding any unwanted interference of the storage and retrieval systems acting from different access sides FS and BS, respectively.

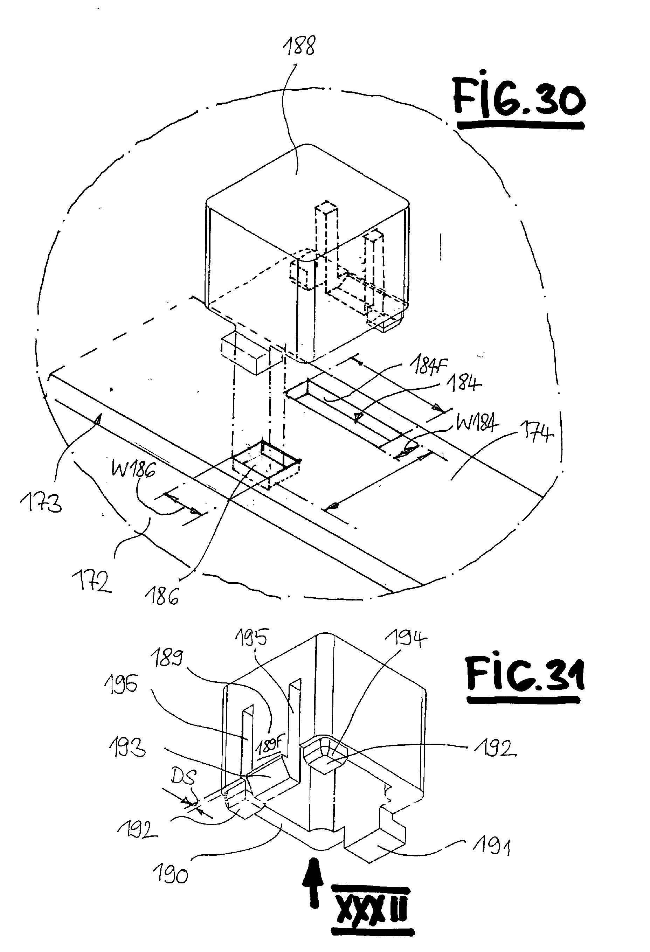

To solve this problem, the depth profile 118 - as can be taken in detail from figure 30 - is provided in its center area of its support portion 174 with two recesses 184, 186 coacting with a stopper element 188 which can be removably inserted therein.

The recesses 184, 186 have a rectangular shape and they are parallally alligned in longitudinal direction of the depth profile 118. The longer recess 184 is closer to the lateral edge of the depth profile whereas the shorter recess 186 which may have even a square cross section is located adjacent to the step 173 in the profile 118.

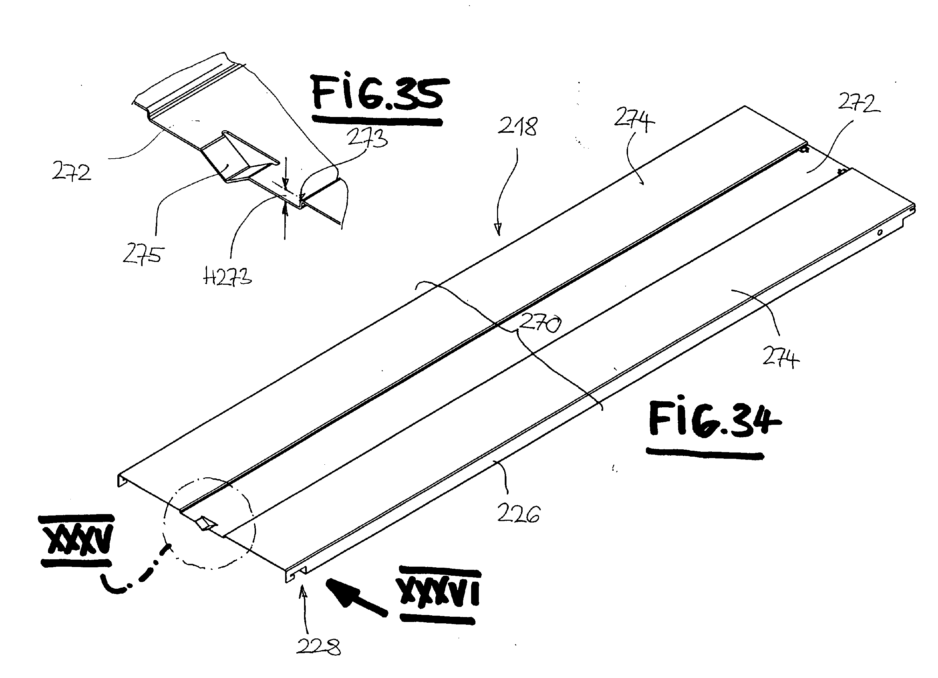

The stopper element 188 has the form of a substantially hollow cube having an open bottom with a base surface 190 having several protrusions 191 to 193. One protrusion 191 at the inner side has the form of a hook which can be inserted into the rectangular recess 186 of the depth profile 118 so that its shoulder 191S can abut the lower surface 174L of the depth profile 118. This can be best seen from figure 33 in which dash-dotted lines indicate the location of the metal sheet of the depth profile 118, i.e. of the support portion 174 when the the stopper element 188 is in its fully mounted position.

Protrusions 192 which are located at the corners opposite to the hook-like protrusion 191 have the form of cubes which have a chamfered top portion 194 which simplifies the insertion of the stopper element 188 into the recess 184. The third protrusion 193 has again the form of a hook which is formed at the outermost end of a resilient tongue 189 of a wall portion of the stopper element 188. This resilient tongue 189 is formed by a pair of parallelly extending slits 195 in the wall which is opposite to the hook-like protrusion 191. The protrusion 193 thus forms a resilient locking protrusion.

In the fully mounted position the base surface 190 entirely contacts the support portion 174 whilst the protrusions 192, 193 project into the elongated recess 184. The dimensions are selected as follows:

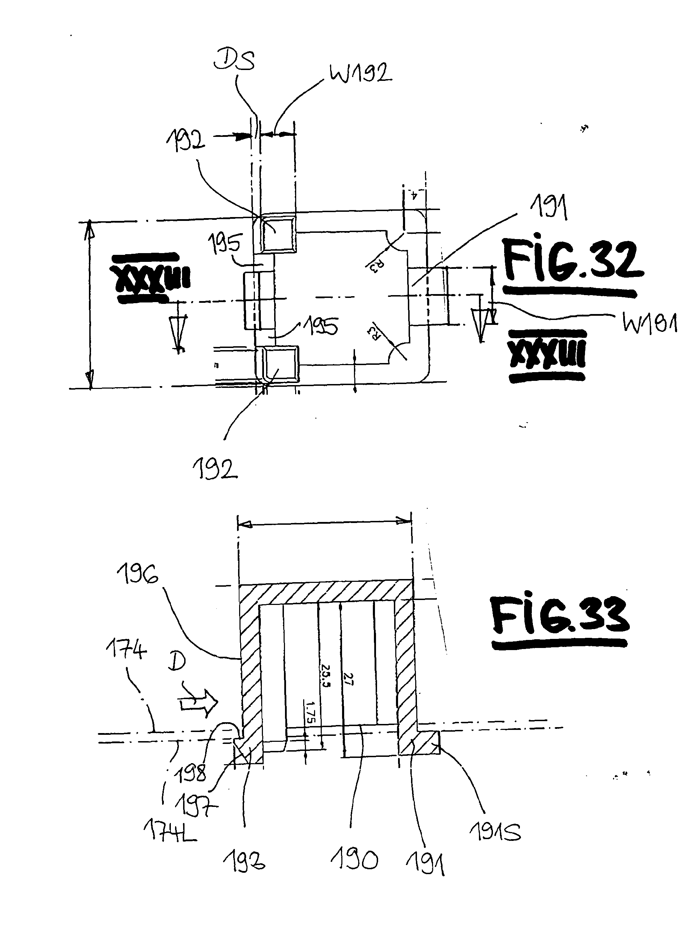

The width W192 of the positioning cubes 192 substantially corresponds to the width W184 of the recess 184 so that the positioning cubes can come into form fit engagement with the recess 184 the chamfered top portions 194 allowing a simplified mounting. The width W191 of the hook-like protrusion 191 is slightly smaller than the the width W186 of the recess 186 so that the stopper element 188 can be correctly positioned in the recesses 184 and 186 of the depth profile 118. Since an outer face 196 of the stopper element 188 has a sidewise distance DS (see figures 31, 32) from the positioning cubes 192 the resilient locking protrusion 193 can only enter the center of the recess 184 while be slightly deflected in the arrow D of figure 33. This deflection is promoted by designing the locking protrusion 193 with a tapered head face 197. After the stopper element 188 having reached its fully mounted position with respect to the support portion 174, i.e. when a shoulder 198 of the locking protrusion 193 reaches the lower end of the recess 184, the locking protrusion 193 snaps outwards so as to resiliently press the resilient tongue 198, i.e. its outer face 198F against an inner surface 184F of the recess 184.

Figure 26 shows that there are recesses 184, 186 provided in order to mount four stopper elements 188 in the center portions of the depth profile 118. However, it is to be noted that it might be sufficient to provide only one stopper element 188 on each support portion 174, if the size of the stopper element 188 is selected adequately.

It should be noted that the design of the stopper element 188 and/or the adapted design of the recesses in the depth profiles is to be seen as additional, but individual inventions. The applicant preserves his rights to make the above described design the subject matter of own separate patent applications.

In the foregoing, embodiments have been described in which the depth profiles 18, 118 are mounted by inserting the remote sides of the depth profiles with their specifically designed end portions 28, 128 of the angled flanges 26, 126 into a vertical slit 30, 130 of a corner portion 32, 132 of the respective backside beam 12-2, 112-2. The depth profile 18, 118 is brought into the first phase of the mounting procedure in a tilted position with respect to the horizontal plane, and after the end portions 28, 128 have passed the opening of the slits it is swivelled back into the horizontal orientation and moved towards the front side beam 12-1, 112-1 so that the front side of the depth profile can be brought into engagemement with the beam frofile there. In the following, a modified embodiment of the storage system is described in which the initial mounting steps are different from the described embodiments:

Again, for simplifying the description, elements which correspond to parts of the described embodiments are designated with similar reference numerals which, however, are headed by a "2".

Basically the design of the depth profile 218 differs from the depth profiles 18, 118 only with respect to the portion which co-operates with the backside beam profile 212-2 which is not illustraded in figure 34 but which can have the same profile cross section as the profile 12-2 or 112-2. However, instead of having vertical slits in corner portions of the profile, slits 230 are formed in the horizontal profile leg 242. This is illustrated in figure 36 in which dash-dotted lines show the position of the depth profile 218 with respect to the beam profile 212-2 when the depth profile 218 in its fully mounted position. Again, the width of the slits 230 is somewhat larger than the thickness of the angled flanges 226, i.e. of the sheet metal which forms the basis therefor.

In the position shown in figure 36 the profile leg 242 has entered a horizontal slit 240 in the end portion 228 of the flange 226. Thus, the end portion 228 provides a hook-like head 238. As the length L238 of the hook-like head 238 is at least slightly smaller than the length L230 of the slit 230 the hook-like head 238 can be easily inserted into the slit 230 when it is positioned above the slit 230. This corresponds to an initial mounting phase. Again, there is no need to position the depth profile by separate handling measures at the back side of the storage system.

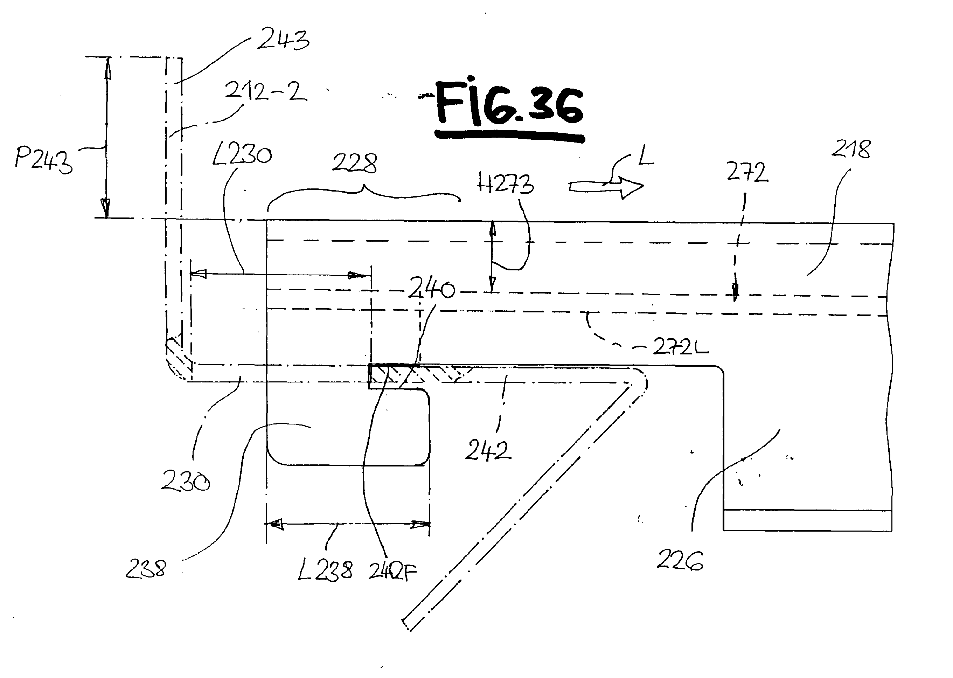

When correctly positioned, the hook-like heads 238 fall down into the slits 230 so that the latter comes into a position facing the horizontal leg 242 of the beam profile. This position is fixed by a specific design of the center portion 272 of the depth profile 218 as can be seen from figure 35.

There, a depression 275 is formed which is deep enough so as to contact the horizontal leg 242 of the beam profile 212-2 when an upper face 240F of the slit 240 approaches the profile leg 242. In this position, the opposite end portion of the depth profile 218 my be brought with its angled flanges 226 and its horizontal slis into allignement with the vertical slits and with the support legs of the other beam profile (not shown) so that the depth profile 218 can be moved in the direction of arrow L (see figure 36) so as to reach the final mounting position. The locking procedure fully corresponds to that as described with the other embodiments so that it can be omitted here.

In the above embodiment, the depression 275 is thus provided just for raising the level of the support portions 274 irrespective of the height H273 of the step 273 in the main leg 270 of the substantially U-form depth profile 218. By this, the measure P243 by which the rim portion 243 projects above the level of the support portions 274 can be selectively controlled.

It is to be noted, however, that such depression 275 can be omitted according to the individual needs of the overall design of the storage system. In such case, the horizontal slit 240 would be positioned such with respect to the upper edge of the support portions 274 that its distance is slightly smaller than the height H273 of the step 273 in the main profile leg 270. Consequently, upon gliding the head portions 238 into the slits 230 of the beam 212-2 the depth profile 218 falls down until the lower surface 272L of the center portion 272 of the profile contacts the leg 242 of the beam profile and the slit 240 faces this leg. In this position the depth profile 218 can be moved in the direction of the arrow L (figure 36) into its final mounting position, as described above.

It becomes apparent from the above that the described storage system ensures prcise tolerances on manufacturing and erection and at the same time enough flexibility to handle different types of crane handling systems and different types of totes or cartons. In detail, the storage system can be tailored to the individual consumers' needs by selecting the depth profiles and shelves, respectively, which gurantee sufficient strength and at the same time enough flexibility in terms of handling the goods to be stored in the system. The core advantage is to be seen that this individual adaptation of the depth profiles does not change the basic constructional concept of the storage system in which the storage capacity is optimized by adapting the depth profiles to the beams such that the vertical distance of adjacent beams can be fully used for storage purposes.

The beams can be used with standard frames, such as STOW Pal-rack or STOW Midi-Rack frames. Since the same hooks of the standard systems can be welded onto the newly designed beams they are fully compatible with the current systems. By this, adjustability in height, e.g. per 50mm, remains available.

It turned out that the above described design allows the construction of storage systems designed for unit loads of up to 25 kg with beam profiles of around 60 mm height and made of bent sheet metal with a thickness of only 2 mm. The special design of the interconnection between depth profile and beams allows to minimise the required perforations and to thereby provide highest possible strenghts. The beams are perforated according to individual needs at a predetermined pitch which corresponds to the crane handling system and the totes to be handled. It is even possible to combine different types of totes in one storage system without changing the mounting procedure.

The specific design of the depth profiles allows that these depth profiles can be applied in single entry as well as double entry installations, which improves the flexibility of assembling the storage system according to the customers' individual needs. The specific interaction between the end portions of the depth profiles and the slits in the beam profiles make sure that the beams do not bulge out when loaded.

The storage system can be built together without any bolts or rivets and nevertheless provides improved stability due to the interaction between the mounted compounds. As the pattern of perforations in the beams is completely felexible towards the system parameters, any possible solution is respect of the storage system criteria as to weight and dimension of the totes as well as with respect to the crane handling system, is feasible.

Of course, modifications of the above embodiments are possible without leaving the scope of the present invention. For example, the vertical force transmission between the depth profile and the beam can be effected through other surfaces of the depth profile. Such surfaces are advantageously formed by a depressed or bent-down material portions of the depth profile.

The storage system can be varied in size, height and numbers of storage units in wide ranges without the need of changing the design of its compomponents. The depth profiles can be used for single and double entry systems provided for single or double deep storage of goods.

The position of the shear center of the beam profiles may also be varied, most preferably by adapting it to the plane of the applied external force in such a way that any torsion tendency of the beam under the influence of shear force is counter-acted by the coupling of the pair of beams through the depth profile.

The invention thus provides A storage system made of vertically extending frames, at least a pair of beams which horizontally interconnect a pair of sidewardly adjacent frames each and at least one depth profile which is mountable to said pair of beams so as to horizontally bridge the space between these beams for providing a support for the goods to be stored. The depth profile has a support surface and at least one downwardly angled flange. For providing a maximum of strength while ensuring a simpliest possible mounting expenditure the depth profile with its one end portion of its flange is engageable in a hook-like manner with a slit-like recess in one of the beams. The slit and the hook are adapted to each other such that upon insertion of said hook-like designed end portion into said slit-like recess the depth profile is shiftable towards said other beam thereby reaching its final mounting position. In this position the hook-like end portion is caught within said slit-like recess and it is lockable there by bending a locking portion thereof into a corresponding recess of said second beam.

## Claims

1. A storage system coprising
- vertically extending frames (10-1 to 10-4),
- at least a pair of beams (12-1, 12-2; 112-1, 112-2) which horizontally interconnect a pair of sidewardly adjacent frames each and
- at least one depth profile (18; 118; 218) which is mountable to said pair of beams so as to horizontally bridge the space between these beams for providing a support for the goods to be stored, wherein
- said depth profile (18; 118; 218) has a support surface (24) and at least one downwardly angled flange (26; 126; 226) and is designed such that it is detachably mountable to said pair of beams (12-1, 12-2; 112-1, 112-2) by using exclusively the material of said depth profile and/or of said beams, the depth profile being lockable with said pair of beams by form fit engagement allowing a horizontal force coupling between said pair of beams, **characterized in that**
- said depth profile (18; 118; 218) with its one end portion (28, 38; 128, 138; 328) of its flange (26; 126; 226) is engageable in a hook-like manner with a slit-like recess (30; 130; 230) in one of the beams (12-2; 112-2; 212-2),
- the slit (30; 130; 230) and the hook (38; 138; 238) being adapted to each other such that upon insertion of said hook-like designed end portion (28, 38; 128, 138; 328) into said slit-like recess (30; 130; 230) the depth profile is shiftable towards said other beam (12-1; 112-1) thereby reaching its final mounting position in which
- the hook-like end portion (28, 38; 128, 138; 328) is caught within said slit-like recess (30; 130; 230) and is lockable by bending a locking portion (78) thereof into a corresponding recess (80) of said second beam.

2. Storage system according to claim 1, wherein said slit-like recess (230) in one of the beams (212-2) is provided in a horizontal support surface (242) of said beam.

3. Storage system according to calim 1, wherein said slit-like recess (30; 130) is provided in a corner portion (32; 132) of said beam (12-2; 112-2) and said depth profile (18; 118) is engageable with said beam (12-2; 112-2) through and end portion (38; 138) of its flange (26; 126) interacting with a vertical slit (30; 130) provided in said corner portion.

4. Storage system according to one of the claims 1 to 3, wherein
said depth profile (18; 118; 218) is engageable with said other beam (12-1; 112-1) of said pair of beams (12-1, 12-2; 112-1, 112-2) through the other end portion of said flange (26; 126; 226) interacting with a vertical slit (56; 156) which is formed into the beam at its corner portion (58) facing the other beam.

5. Storage system according to one of the claims 1 to 4, wherein
said end portions (28) of said flange (26) of said depth profile (18; 118) each comprise a horizontal slit (40, 52; 140, 152) having essentially the width (W40, W52) of the thickness (W42, W60) of the corresponding beam (12-2, 12-1) to be engaged with.

6. Storage system according to one of the claims 1 to 5, wherein
the other end portion of said depth profile (18) is designed such that a face (62) of a cut out portion (52) can be brought into an abutting position with the other beam (60F, 12-1) when the depth profile (18) has reached its final mounting position (Figure 8).

7. Storage system according to claim 6, wherein said face (62) of said cut out portion is the bottom surface of said horizontal slit (52).

8. Storage system in particular according to one of the claims 1 to 7, coprising
- vertically extending frames (10-1 to 10-4),
- at least a pair of beams (12-1, 12-2) which horizontally interconnect a pair of sidewardly adjacent frames (10-1, 10-2 and 10-3, 10-4) each and
- at least one depth profile (18) which is mountable to said pair of beams so as to horizontally bridge the space between these beams for providing a support for the goods to be stored, wherein
- said depth profile (18; 118; 218) has a support surface (24) and at least one downwardly angled flange (26; 126; 226) and is designed such that it is detachably mountable to said pair of beams (12-1, 12-2) by using exclusively the material of said depth profile and/or of said beams, the depth profile being lockable with said pair of beams by form fit engagement allowing a horizontal force coupling between said pair of beams, **characterized in that**
- end portions (28; 128; 228) of said flange (26; 126; 226) of said depth profile each comprise a horizontal slit (40, 52; 140, 152; 240, 252) having essentially the width (W40, W52) of the thickness (W42, W60) of the corresponding beam (12-1, 12-2) to be engaged with;
- said depth profile (18; 118; 218;) being supported at its both ends on a horizontal beam surface (42, 60) which lies by a predetermined measure (VD) below the upper edge (60U) of the beam (12-1; 112-1, 112-2) forming an entry of the storage system, wherein
- said predetermined measure (VD) is greater than the distance (W52) of said horizontal slit (52) from the uppermost surface (74) of said depth profile (18).

9. Storage system according to one of the claims 1 to 8 in the embodiment of a storage system having a single entry, wherein
the beam (12-1) at the entry side of the storage system has an essentially closed profile with a stepped upper surface (60, 60U) and
the other beam (12-2) of said pair of beams (12-1, 12-2; 112-1, 112-2) has a profile essentially in the form of a "Z" the upper horizontal leg (42) of which defines a support surface for said depth profile and continues in an upwardly bent rim portion (43) having a length (L43) which is grater than the step (VD) in the upper surface (60, 60U) of the beam (12-1) at the entry side.

10. Storage system according to one of the claims 1 to 8 in the embodiment of a storage system having a double entry, wherein
both beams (112-1, 112-2) have an essentially closed profile with a stepped upper surface (160, 160U) and
the profiles (112-1, 112-2) are arranged symmetrically with respect to a vertical center plane which is parallel to said beams.

11. Storage system according to one of the claims 3 to 11, wherein said end portion (28; 128) of the flange (26; 126) of the depth profile (18; 118) is in the form of a widened head portion (38; 138) which is adjacent to an essentially horizontal slit (40; 140) and which is fittingly insertable into said vertical slit (30; 130) of the beam (12-2; 112-2) in a tilted position, so that upon insertion and moving (M) of the depth profile into a horizontal mounting position the widened head (38; 138) is secured within said slit (40; 140) against excessive horizontal movement of the depth profile.

12. Storage system according to claim 11, wherein
the widened head (38; 138) has a functional surface (68; 168) which in the final mounting position of the depth profile comes close to a wall portion (48; 166) of the corresponding beam profile (12-2; 112-2).

13. Storage system according to one of the claims 1 to 12, wherein the design of the depth profile (18; 118; 218) is adapted to the form and location of the corresponding recesses in the beams (12-1, 12-2; 112-1, 112-2) such that the flanges (26; 126; 226) contribute to the force transmission from the depth profile into said beams.

14. Storage system according to one of the claims 1 to 13, wherein said depth profile (12-1, 12-2; 112-1, 112-2) is symmetrical with respect to a center plane (CP) which in the mounted position is orthogonal to said pair of beams(12-1, 12-2; 112-1, 112-2).

15. Storage system according to one of the claims 1 to 14, wherein said depth profile (18; 118; 218) has a cross section essentially in the form of a preferably flat "U" in which the two vertical extending flanges (26; 126; 226) are bent down from a main leg (70) which bridges the two flanges (26) and which has a slightly depressed center portion (72) by which the depth profile contacts the upper side (42, 60; 160) of the respective beam.

16. Storage system according to one of the claims 1 to 15, wherein the flanges (26; 126; 226) of said depth profile have an end portion (27) each which is bent inwardly.

17. Storage system according to one of the claims 9 to 16, wherein said beams (12-1, 12-2; 112-1, 112-2) have a profile having a shear center lying in a plane (PSC) which lies close to a plane of the resulting support force acting on said depth profile.

18. Storage system according to one of the claims 1 to 17, wherein said locking portion (78) to be bent into said corresponding recess (80) is formed by a material tongue which results from an essentially U-form cut-out (81) in the profile.

19. Storage system according to claim 18, whwerein said material tongue (78) has a width (W78) which essentially corresponds to that of the recess (80) in said beam (12-1) lying below said tongue (78) when said depth profile is in its final mounting position.

20. Storage system according to claim 18 or 19, wherein said depth profile (18) adjacent to said material tongue (78) has a hole (79) through which a tool for bending said bent down locking portion (78) back into a position allowing the removal of said depth profile is insertable.

21. Storage system according to one of the claims 1 to 20, comprising a plurality of units consisting of vertically extending frames (10-1 to 10-4), a plurality of pair of beams (12-1, 12-2; 112-1, 112-2) staggered in vertical direction by a predetermined distance (DV) and a plurality of depth profiles (18; 118; 218).

22. Storage system according to claim 21, wherein the depth profiles (18*) adjacent to said frames (14) are made by cutting the depth profiles (18) into two halves.

23. A beam for a storage system according to one of the claims 1 to 22, said beam having an essentially closed profile with a stepped upper surface (60, 60U) and is made by bending a metal sheet into an essentially rectangular configuration in which the adjacent end portions (69 I, 69 O) lying opposite to said stepped upper surface (60, 60U)are essentially abutting each other via inwardly bent terminal portions (69 T).

24. A beam for a storage system according to one of the claims 1 to 22, said beam having a profile essentially in the form of a "Z" the upper horizontal leg (42) of which defines a support surface for a depth profile and continues in an upwardly bent rim portion (43).

25. A beam according to claim 23 or 24, comprising a plurality of sidewardy spaced vertical slits (30, 56) in corner portions (32, 58) of the profile adjacent to its respective support surface (42, 60).

26. A beam according to claim 25, comprising recesses (80, 80S) in the area of said slits provided for receiving a locking portion (78) of the depth profile (18) interacting with said corresponding vertical slit (56).

27. A depth profile for a storage system sccording to one of the claims 1 to 22 to be used with a beam according to one of the claims 23 to 26, said depth profile (18) having a support surface (24) and at least one downwardly angled flange (26), **characterized in that**
- said support surface (24) is divided into a lateral elevated support portion (74) for the goods to be stored and an adjacent force transmitting portion (72) for contacting a beam of the storage system,
- said force transmitting portion (72) being formed by a depression (step 73) of the support surface; wherein
- end portions of said flange (26) each comprise a slit (40, 52) which is parallel to longitudinal extension of the depth profile and which has essentially the width (W40, W52) of the thickness (W42, W60) of the corresponding beam to be mounted with; and
- an upper edge (52U) of said slit (52) is essentially flush with the lower surface (72L) of said said force transmitting portion (72) of the profile.

28. A depth profile according to claim 27, wherein one end portion (28) of said flange (26) of the depth profile is in the form of a widened head portion (38) which is adjacend to said slit (40); wherein
said slit (40) merges into an end face (44) of the flange (26) via a slightly upwardly angled portion (40F).

29. A depth profile according to claim 27 or 28, having a plane of symmetry (CP) in the center of its force transmitting portion (72).

30. A depth profile according to one of the claims 27 to 29, wherein at least one locking tongue (78) is formed in the force transmitting portion (72), said tongue being formed by an essentially U-form cut-out (81) in the profile.

31. A depth profile according to claim 30, wherein said depth profile (18) adjacent to said material tongue (78) has a hole (79) through which a tool for manipulating said locking tongue after being bent down can be inserted.

32. A depth profile according to one of the claims 27 to 31, wherein the flange (26) of said depth profile has an end portion (27) which is bent inwardly.
